# EUROPEAN PATENT SPECIFICATION

(11) **EP 1 035 186 B1**
(45) Date of publication and mention of the grant of the patent: **14.02.2007**
(21) Application number: 97946104.3
(22) Date of filing: 04.12.1997
(51) Int. Cl.: C09J 7/02, C09J 7/04

(54) **ADHESIVE TAPE FOR CONNECTING ELECTRONIC COMPONENTS**
KLEBEBAND ZUM VERBINDEN ELEKTRONISCHER BANTEILE
BANDE ADHESIVE PERMETTANT DE CONNECTER DES COMPOSANTS ELECTRONIQUES

(43) Date of publication of application: 13.09.2000
(73) Proprietor: NITTO DENKO CORPORATION, Osaka 567 (JP)
(72) Inventor: NAGASAKI, Kunio, Ibaraki-shi Osaka 567 (JP); ICHIKAWA, Hiroki, Ibaraki-shi Osaka 567 (JP); TANIMOTO, Masakazu, Ibaraki-shi Osaka 567 (JP); OKUNO, Toshimitsu, Ibaraki-shi Osaka 567 (JP)
(74) Representative: Grünecker, Kinkeldey, Stockmair & Schwanhäusser Anwaltssozietät
(86) International application number: PCT/JP1997/004445
(87) International publication number: WO 1999/028401

(56) References cited:
- JP-A- 2 016 178
- JP-A- 5 311 130
- JP-A- 62 177 085
- JP-B2- 56 013 040
- US-A- 4 581 281
- DATABASE CHEMICAL ABSTRACTS [Online] 22 April 1997 (1997-04-22) SIM,JAE-HUN: "MANUFACTURE OF HOT-MELT ADHESIVE FILM" retrieved from STN, accession no. 133:208932 XP002160818
- Edited by TAIRA OKUDA, "'Polymer Applications', Separate Volume 8, No. 20, Special Edition Pressure-Sensitive Adhension (in Japanese)", POLYMER PUBLISHING ASSOCIATION, (KYOTO), 25 June 1971, pages 104-105, 107-108, 144-145.

## Description

The present invention relates to a method for holding electronic parts with lead wires, and to a method for automatically supplying electronic parts into an assembling process of integrated circuit substrates.

There have been known automatic assembling systems by which electronic parts with lead wires (resistor elements, condenser elements, etc.) are held in a lined-up arrangement by continuously arranging with an adhesive tape and another adhesive or non-adhesive tape and automatically supplied as such into processes for assembling substrates of integrated circuits, etc. Namely, the electronic parts held in a lined-up arrangement are disarranged by cutting the lead wires at the end and, at the same time, automatically supplied into the assembling process one after another, thus assembling substrates of integrated circuits, etc. under computed control. In these systems, it is required that electronic parts are continuously arranged with adhesive tapes at definite intervals and in parallel at a high accuracy.

As the adhesive tapes usable in the above-mentioned systems for supplying electronic parts, there have been known those composed of a base tape and a pressure-sensitive adhesive layer formed thereon wherein the pressure-sensitive adhesive layer is prepared by adding a hot-melt resin to a conventional pressure-sensitive adhesive having tackiness at ordinary temperatures to thereby improve the creeping characteristics (see, for example, JP-B-56-13040; the term "JP-B" as used herein means an "examined Japanese patent publication"). However, these adhesive tapes can hardly exhibit satisfactory characteristics in general. This is because, in the pressure-sensitive adhesive layer, attempts are made to achieve good adhesive properties and heat resistance by adding a hot-melt resin having a definite melting point to an acrylic polymer having tackiness at ordinary temperatures. When the hot-melt resin is added only in an excessively small amount, therefore, no satisfactory creeping characteristics can be achieved. In this case, there arise some problems such as a stop of the automatic supplying system due to the slippage of the electronic parts. When the hot-melt resin is added in a sufficient amount so as to establish satisfactory creeping characteristics, on the other hand, the adhesive layer becomes hard and brittle. In this case, much energy is needed for the adhesion of the adhesive tape and thus the taping speed is lowered, which worsens the workability. Moreover, there is a fear that the qualities of electronic parts might be deteriorated during the taping at a high temperature. In addition, there arise some problems such that satisfactory impact resistance can be hardly achieved in such a case and, as a result, the electronic parts thus held are easily disarranged upon impact during transportation, etc.

Also, there have been known adhesive tapes composed of a base tape and an adhesive layer formed thereon which comprises an ethylene/(meth)acrylic acid/butyl (meth)acrylate terpolymer (JP-A-3-121167; the term "JP-A" as used herein means an "unexamined published Japanese patent application"). Although these adhesive tapes have sufficient creeping characteristics for holding electronic parts, they need much energy for adhesion, as compared with those containing pressure-sensitive adhesives, and fail to achieve sufficient adhesive properties unless taping is performed at a high temperature. When such a polymer is employed without being crosslinked, carboxyl groups in the (meth)acrylic acid component in the polymer remain in the adhesive layer and, as a result, seriously worsen the creeping characteristics and adhesive properties to lead wires due to the moisture absorbed by the adhesive layer at high temperatures and humidity. Even if such a polymer is crosslinked with metal ions according to the conventional method, the crosslinkage is loosened due to the moisture absorbed by the adhesive layer at high temperatures and humidity, thus causing the same problems as those observed when the polymer is not crosslinked.

The present invention has been accomplished by the methods according to claims 1 and 2, comprising the use of an adhesive tape for continuously arranging electronic parts, which comprises a base material having formed thereon an adhesive layer comprising from 20 to 150 parts by weight of a rosin resin per 100 parts by weight of a thermoplastic resin having no carboxyl group in side chains. The adhesive tape has good adhesion without causing any slippage of electronic parts, shows a high impact resistance and sustains an excellent capability of holding the parts even at high temperatures and humidity.

Different from the conventional ones with the use of pressure-sensitive adhesives, in the adhesive layer employed in the adhesive tape for continuously arranging electronic parts of the present invention, the thermoplastic resin per se has sufficient properties for preventing electronic parts from slippage and, further, the polarity of the rosin resin contained in the adhesive layer resin contributes to the achievement of the satisfactory adhesion to metallic lead wires. At the same time, the plasticizing effect of the rosin resin on the thermoplastic resin enables taping at a low temperature and, furthermore, sufficient adhesion of the adhesive tape to the non-adhesive tape in another side of each electronic part.

The thermoplastic resin to be used in the adhesive layer of the adhesive tape for continuously arranging electronic parts according to the present invention is an ethylene/vinyl acetate copolymer containing from 3 to 50 by weight of vinyl acetate from the viewpoints of the compatibility with the rosin resin, production cost, handling properties, etc.

Because of having no carboxyl group in side chains, such a thermoplastic resin scarcely causes any deterioration in the capability of the adhesive tape of the present invention of holding electronic parts due to the moisture absorption even at high temperatures and humidity.

It is also preferable that the thermoplastic resin to be used in the present invention is one which has a dynamic modulus (E') of at least 5 x 10⁶ Pa, still preferably from 1 x 10⁷ to 1 x 10⁹ Pa, at 20°C in the measurement of its dynamic viscoelasticity, since the adequate capability of holding electronic parts, taping workability and impact resistance can be thus achieved easily.

The term "dynamic modulus (E')" as used herein means the tensile dynamic modulus which is a value considered as the elastic part wherein a stress applied externally is stored as strain energy and determined with the use of an apparatus for measuring dynamic viscoelasticity at a fundamental frequency of 10 Hz and an amplitude of about 1.5 µm. Examples of the apparatus include "Dynamic Spectrometer Model RDS-II" manufactured by Rheometrics, Inc.

The rosin resin to be added to the above-mentioned thermoplastic resin is not particularly restricted. From the viewpoint of improving the adhesive properties and, at the same time, plasticizing the adhesive layer, it is preferable to use the rosin resin having an acid value of at least 2 and a softening point of from 60 to 180 °C. The softening point can be measured according to JIS K-5903. When the adhesive properties to lead wires made of metals is taken into consideration, it is preferable to use those having an acid value of at least 50. The upper limit of the acid value is preferably 200.

It is necessary in the present invention that such a rosin resin is added in an amount of from 20 to 150 parts by weight, preferably from 40 to 120 parts by weight, per 100 parts by weight of the above-mentioned thermoplastic resin. When the content of the rosin resin is less than 20 parts by weight, there arises some problems that the adhesive tape cannot achieve any sufficient adhesive properties to lead wires, and that the adhesive is not plasticized sufficiently, failing to provide the sufficient effect in improving the taping workability (low temperature taping). On the other hand, when the content of the rosin resin is more than 150 parts by weight, the amount is over the range in which the effect as a plasticizer is exhibited, and hardening of the adhesive is caused and the taping workability is worsened.
It is preferred that the adhesive layer contains the thermoplastic resin and rosin resin in a total amount of 80 % by weight or more based on the weight of the adhesive layer.

In addition to the above-mentioned components, the adhesive layer of the present invention may further contain fillers (for example, glass fiber, inorganic fine particles, polymer particles), blocking inhibitors, lubricants (for example, fatty acid amides), antioxidants, crosslinking agents, plasticizers, etc., if desired.

This adhesive layer is formed on the base material, which will be described below, by applying a solution, an emulsion or a dispersion thereof to the base material and then drying, or by hot-melt extrusion processing. In usual, the adhesive layer has a thickness of about 5 to 300 µm, preferably from 10 to 70 µm.

As the base material, use can be generally made of, for example, paper materials (crepe paper, kraft paper, etc.), plastic films or sheets, fabrics or metal foils. The paper materials preferably have a basis weight of 10 to 150 g/m², and the others preferably have a thickness of 6 to 250 µm.
The surface of the base material to be brought into contact with the adhesive layer may be further corona-treated or coated with an anchor coating to thereby enhance the adhesion to the adhesive layer. It is also possible to form an intermediate layer comprising a thermoplastic resin, a thermoplastic elastomer, etc. and having a thickness of about 1 to 100 µm.

On another surface of the base material, a releasing agent layer comprising a silicone compound, a long-chain alkyl compound, etc. may be formed to thereby control the unwinding force of the adhesive tape or prevent blocking.

To further illustrate the present invention in greater detail, and not by way of limitation, the following Examples will be given wherein all parts are by weight.

### EXAMPLE 1 (Reference Example)

To 100 parts of an ethylene/ethyl acrylate copolymer (A-701: manufactured by Du Pont-Mitsui Polychemicals Co., Ltd.) containing 9 % by weight of ethyl acrylate and having a dynamic modulus (E') at 20 °C in the measurement of dynamic viscoelasticity of 1 x 10⁸ Pa, was added 50 parts of a rosin resin (KR-85: manufactured by Arakawa Chemical Industries Ltd.) having a softening point of about 83 °C and an acid value of about 170. After hot-melt blending, the adhesive thus obtained was applied by hot-melt extrusion coating on one face of crepe paper weighing about 70 g/m² in such a manner as to give an adhesive layer of 50 µm in thickness. Thus, an adhesive tape of the present invention was obtained.

### EXAMPLE 2

To 100 parts of an ethylene/vinyl acetate copolymer (EVAFLEX P-1007: manufactured by Du Pont-Mitsui Polychemicals Co., Ltd.) containing 10 % by weight of vinyl acetate and having a dynamic modulus (E') at 20 °C in the measurement of dynamic viscoelasticity of 2 x 10⁸ Pa, were added 100 parts of a rosin resin (KE-604: manufactured by Arakawa Chemical Industries Ltd.) having a softening point of 127 °C and an acid value of about 200 and 50 parts of fine silica particles (average particle size: about 2 µm) employed as a blocking inhibitor. After hot-melt blending, the adhesive thus obtained was applied by hot-melt extrusion coating on one face of crepe paper weighing about 70 g/m² in such a manner as to give an adhesive layer of 50 µm in thickness. Thus, an adhesive tape of the present invention was obtained.

### EXAMPLE 3

To 100 parts of an ethylene/vinyl acetate copolymer (EVAFLEX P-1907: manufactured by Du Pont-Mitsui Polychemicals Co., Ltd.) containing 19 % by weight of vinyl acetate and having a dynamic modulus (E') at 20 °C in the measurement of dynamic viscoelasticity of 7 x 10⁷ Pa was added 50 parts of a rosin resin (KE-604: manufactured by Arakawa Chemical Industries Ltd.) having a softening point of 127 °C and an acid value of about 200. After hot-melt blending, the adhesive thus obtained was applied by hot-melt extrusion coating on one face of crepe paper weighing about 70 g/m² in such a manner as to give an adhesive layer of 50 µm in thickness. Thus, an adhesive tape of the present invention was obtained.

### COMPARATIVE EXAMPLE 1

To 100 parts of an acrylic pressure-sensitive adhesive composed of 80 parts of butyl acrylate, 16 parts of ethyl acrylate and 4 parts of acrylic acid, were added 100 parts of terpene-modified phenolic resin having a softening point of 140 °C and 3 parts of an isocyanate crosslinking agent. After mixing, the obtained blend was applied onto one face of crepe paper weighing about 70 g/m² in such a manner as to give, after drying, a thickness of 40 µm and dried at 100 °C for 5 minutes to thereby give an adhesive tape.

### COMPARATIVE EXAMPLE 2

An adhesive tape was prepared in the same manner as in Example 1 except for using an ethylene/methacrylic acid copolymer (NUCREL 1214: manufactured by Du Pont-Mitsui Polychemicals Co., Ltd.) containing 14 % by weight of methacrylic acid.

### COMPARATIVE EXAMPLE 3

An adhesive tape was prepared in the same manner as in Example 1 except for adding no rosin resin.

### COMPARATIVE EXAMPLE 4

An adhesive tape was prepared in the same manner as in Example 3 except for adding no rosin resin.

Each adhesive tape for continuously arranging electronic parts thus obtained was evaluated in performance by the following methods.

### Adhesive Performance (Pulling-out Force)

Radial electronic parts (lead wire diameter: 0.5 mm, two leg type) were placed in parallel at intervals of 10 mm on a kraft paper tape weighing 200 g/m² (width: 18 mm) in such a manner that the tip of each electronic part projected out from the end of the paper tape by 20 mm. Further, each of the adhesive tapes (width: 8 mm) obtained in the above Examples and Comparative Examples was layered thereon so that the surface of the adhesive layer came into contact with the lead wires. After contact bonding at 100 °C or 150 °C for 0.5 second under a pressure of 5 kg/cm², test pieces were obtained.

Some of the test pieces thus obtained were allowed to stand at 23 °C for 1 to 5 hours, while others were allowed to stand at a high temperature and humidity (60 °C, 95 % RH) for 1,000 hours. Each electronic part of the test pieces was pulled out at 23 °C at a speed of 300 mm/min to measure the force required for pulling-out the lead wires.

### Holding Performance (Slippage Angle)

Radial electronic parts (lead wire diameter: 0.5 mm, two leg type) were placed in parallel at intervals of 10 mm on a kraft paper tape weighing 200 g/m² (width: 18 mm) in such a manner that the tip of each electronic part projected out from the end of the paper tape by 20 mm. Further, each of the adhesive tapes (width: 8 mm) obtained in the above Examples and Comparative Examples was layered thereon so that the surface of the adhesive layer came into contact with the lead wires. After contact bonding at 150 °C for 0.5 second under a pressure of 5 kg/cm², test pieces were obtained.

While keeping the test pieces thus obtained in such a manner that the lead wires were in parallel to the floor (i.e., the longitudinal direction of the test piece is vertical to the floor), a load of 20 g was applied to the tip of the radial electronic part, the lead wires of which had been fixed between the kraft paper tape and the adhesive tape, so as to apply a shear stress to the electronic part in the direction of transversing the lead wires. After allowing to stand at 40 °C for 24 hours or at a high temperature and humidity (60 °C 95 % RH) for 24 hours, the slippage angles of the lead wires slipped laterally were measured.

**Table 1**

| | Adhesive Properties (kg) | | | | Holding Properties (degree) | |
|---|---|---|---|---|---|---|
| | Bonded at 100 °C | | Bonded at 150 °C | | At 40 °C | At 60 °C, 95 % RH |
| | 23 °C | After Moistened | 23 °C | After Moistened | | |
| Example 1* | 3.0 | 2.8 | 5.5 | 5.4 | 0 | 0 |
| Example 2 | 2.5 | 2.0 | 5.3 | 5.0 | 0 | 0 |
| Example 3 | 3.9 | 3.0 | 5.8 | 5.5 | 0 | 0 |
| Comparative Example 1 | 4.5 | 1.8 | 4.6 | 3.5 | 10 | 20 |
| Comparative Example 2 | no adhesion | - | 4.0 | 1.5 | 0 | 10 |
| Comparative Example 3 | no adhesion | - | 3.0 | 2.5 | 0 | 0 |
| Comparative Example 4 | no adhesion | - | 2.0 | 1.5 | 0 | 0 |

| | | | | | | |
|---|---|---|---|---|---|---|
| *Reference Example | | | | | | |

### INDUSTRIAL APPLICABILITY

The adhesive tape for continuously arranging electronic parts of the present invention has advantages such as having good adhesive properties, causing no slippage of the electronic parts even in taping at a relatively low temperature, being excellent in impact resistance and scarcely suffering from the deterioration in the capability of holding the electronic parts due to the moisture absorption even at high temperatures and humidity.

## Claims

1. A method for holding electronic parts with lead wires, comprising taping the electronic parts together using an adhesive tape so that the electronic parts are continuously arranged via the lead wires in a lined-up arrangement, the adhesive tape comprising a base material and an adhesive layer formed thereon, said adhesive layer comprising from 20 to 150 parts by weight of a rosin resin per 100 parts by weight of a thermoplastic resin having no carboxyl groups in side chains, wherein said thermoplastic resin is an ethylene/vinyl acetate copolymer containing from 3 to 50% by weight of vinyl acetate.

2. A method for automatically supplying electronic parts into an assembling process of integrated circuit substrates, comprising
holding electronic parts with lead wires together using an adhesive tape so that the electronic parts are continuously arranged via the lead wires in a lined-up arrangement, and
automatically supplying said arrangement to said assembling process,
wherein said adhesive tape comprises a base material and an adhesive layer formed thereon, said adhesive layer comprising from 20 to 150 parts by weight of a rosin resin per 100 parts by weight of a thermoplastic resin having no carboxyl groups in side chains, wherein said thermoplastic resin is an ethylene/vinyl acetate copolymer containing from 3 to 50% by weight of vinyl acetate.

## Patentansprüche

1. Verfahren zum Halten elektronischer Bauteile mit Bleidrähten, umfassend das Zusammenkleben der elektronischen Teile unter Verwendung eines Klebebandes, so dass die elektronischen Teile durchgängig mit den Bleidrähten in einer reihenartigen Anordnung angeordnet sind, worin das Klebeband ein Basismaterial sowie eine darauf befindliche Klebeschicht umfasst, worin die Klebeschicht von 20 bis 150 Gewichtsteile eines Rosinharzes pro 100 Gewichtsteile eines thermoplastischen Harzes ohne Carboxylgruppen in den Seitengruppen umfasst, worin das thermoplastische Harz ein Ethylen/Vinylacetatcopolymer ist, welches von 3 bis 50 Gew.-% Vinylacetat enthält.

2. Verfahren zur automatischen Bereitstellung von elektronischen Teilen in einem Zusammenbauverfahren von integrierten Schaltkreissubstraten, umfassend
das Halten der elektronischen Teile mit Bleibdrähten unter Verwendung eines Klebebandes, so dass die elektronischen Teile durchgängig über die Bleidrähte in einer reihenartigen Anordnung angeordnet sind, und
das automatische Bereitstellen dieser Anordnung in dem Zusammenbauverfahren,
worin das Klebeband ein Basismaterial sowie eine darauf befindliche Klebeschicht umfasst, worin die Klebeschicht von 20 bis 150 Gewichtsteile eines Rosinharzes pro 100 Gewichtsteile eines thermoplastischen Harzes ohne Carboxylgruppen in den Seitengruppen umfasst, worin das thermoplastische Harz ein Ethylen/Vinylacetatcopolymer ist, welches von 3 bis 50 Gew.-% Vinylacetat enthält.

## Revendications

1. Procédé pour connecter des composants électroniques avec des fils d'amenée, comprenant le bandage des composants électroniques ensemble avec une bande adhésive de sorte que les composants électroniques soient disposés en continu via les fils d'amenée dans un arrangement en ligne, la bande adhésive comprenant un matériau de base et une couche adhésive formée sur celui-ci, ladite couche adhésive comprenant de 20 à 150 parties en poids d'une résine de colophane pour 100 parties en poids d'une résine thermoplastique n'ayant pas de groupes carboxyles dans les chaînes latérales, où ladite résine thermoplastique est un copolymère d'éthylène/ acétate de vinyle contenant de 3 à 50 % en poids d'acétate de vinyle.

2. Procédé pour fournir automatiquement des composants électroniques à un procédé d'assemblage de cartes de circuits intégrés, comprenant :
la connexion des composants électroniques avec des fils d'amenée ensemble en utilisant une bande adhésive de sorte que les composants électroniques soient disposés en continu via les fils d'amenée dans un arrangement en ligne, et
la fourniture automatique dudit arrangement audit procédé d'assemblage,
où ladite bande adhésive comprend un matériau de base et une couche adhésive formée sur celui-ci, ladite couche adhésive comprenant de 20 à 150 parties en poids d'une résine de colophane pour 100 parties en poids d'une résine thermoplastique n'ayant pas de groupes carboxyles dans les chaînes latérales, où ladite résine thermoplastique est un copolymère d'éthylène/ acétate de vinyle contenant de 3 à 50 % en poids d'acétate de vinyle.
